# EUROPÄISCHE PATENTSCHRIFT

(11) **EP 3 464 404 B1**
(45) Veröffentlichungstag und Bekanntmachung des Hinweises auf die Patenterteilung: **07.10.2020**
(21) Anmeldenummer: 17727863.7
(22) Anmeldetag: 01.06.2017
(51) Int. Cl.: C08G 18/48, C08G 18/50, C08G 18/66, C08G 18/72, C08G 18/76, C08G 18/79, C08G 18/12, C08G 18/18, C08G 18/32, C08G 18/40, C08G 18/42, C08K 5/25, C08G 101/00, C08K 5/372

(54) **POLYURETHANE MIT REDUZIERTER ALDEHYDEMISSION**
POLYURETHANES WITH REDUCED ALDEHYDE EMISSION
POLYURÉTHANES AVEC ÉMISSION RÉDUITE D'ALDÉHYDE

(30) Priorität: 03.06.2016 EP 16172951
(43) Veröffentlichungstag der Anmeldung: 10.04.2019
(73) Patentinhaber: BASF SE, 67056 Ludwigshafen am Rhein (DE)
(72) Erfinder: TOMOVIC, Zeljko, 49448 Lemfoerde (DE); OTERO MARTINEZ, Iran, 49448 Lemfoerde (DE)
(74) Vertreter: BASF IP Association
(86) Internationale Anmeldenummer: PCT/EP2017/063297
(87) Internationale Veröffentlichungsnummer: WO 2017/207687

(56) Entgegenhaltungen:
- JP-A- 2001 187 402
- US-A1- 2006 141 236
- US-A1- 2013 203 880

## Beschreibung

Die vorliegende Erfindung betrifft ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) Verbindungen der allgemeinen Formel R(-S)ₙ, wobei R für einen beliebigen Rest, n für eine beliebige Zahl von 1 bis 8 und S für einen Rest gemäß Formel 1 steht: 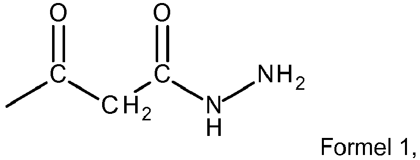 und gegebenenfalls (e) Treibmittel, (f) Kettenverlängerungs- und/oder Vernetzungsmittel und (g) Hilfsmittel und/oder Zusatzstoffe zu einer Reaktionsmischung vermischt und die Reaktionsmischung zum Polyurethan ausreagieren lässt. Weiter betrifft die vorliegende Erfindung ein Polyurethan, herstellbar nach einem solchen Verfahren sowie die Verwendung eines solchen Polyurethanes in geschlossenen Räumen, beispielsweise in Verkehrsmitteln.

Polyurethane zeichnen sich durch vielfältige Einsatzmöglichkeiten aus, beispielsweise in der Möbelindustrie als Sitzpolster oder als Bindemittel für Spanplatten, als Isoliermaterial in der Bauindustrie, als Isoliermaterial, beispielsweise von Rohren, Warmwasserspeichern oder Kühlschränken und als Verkleidungsteile, beispielsweise im Fahrzeugbau. Insbesondere im Automobilbau werden Polyurethane häufig eingesetzt, beispielsweise in der Automobilaußenverkleidung als Spoiler, Dachelemente, Federelemente sowie in der Automobilinnenverkleidung als Dachverkleidungen, Teppichhinterschäumungen, Türverkleidungen, Lenkräder, Schaltknöpfe und Sitzpolster.

Dabei ist bekannt, dass Polyurethane zu Emissionen organischer Substanzen neigen, die zu Geruchsbelästigungen oder im Fall von hohen Konzentrationen zu Unwohlsein führen können. Dabei sind insbesondere abgeschlossene Räume, beispielsweise im Innern von Gebäuden oder Fahrzeugen, beispielsweise Automobilen besonders betroffen. Ein Beispiel für solche Emissionen ist die Emission von Aldehyden. Dabei gibt es bereits unterschiedliche Ansätze zur Verringerung der Aldehydemissionen.

So beschreibt Beispielsweise EP 1428847, dass Aldehydemissionen durch nachträgliche Zugabe von polymeren Stoffen mit primären und/oder sekundären Aminogruppen vermindert werden können. Verantwortlich für die Reduktion der Emissionen sind die Amingruppen im Polymer. Da diese gegenüber Isocyanat reaktiv sind und größtenteils durch Reaktion mit dem Isocyanat deaktiviert werden, sollte der polymere Wirkstoff auf den bereits hergestellten Schaum gegeben werden. Nachteilig ist hier ein umständliches Verfahren mit einem Zusätzlichen Schritt der Nachbehandlung des Schaumstoffs. Der Einsatz in kompakten Systemen oder geschlossenzelligen Schaumstoffen ist nicht möglich.

In US 20130203880 wird der Einsatz von Polyhydrazodicarbonamid als Substanz zur Reduktion von Aldehydemissionen in Polyurethanschaumstoffen beschrieben. Eine deutliche Reduktion von Aldehyden wird allerdings nur bei Zugabe einer großen Menge an Polyhydrazodicarbonamid von 2 bis 5,5 Gew.-% in der Polyolkomponente erreicht. Da Polyhydrazodicarbonamid ebenfalls katalytische Eigenschaften aufweist, wird durch die Zugabe dieser Substanz in dieser Größenordnung das Reaktionsprofil geändert. Weiter ist die erreichte Aldehydreduktion selbst bei Einsatz großer Mengen an Polyhydrazodicarbonamid weiter verbesserungswürdig.

Aus US 2006/0141236 ist der Einsatz von Hydrazinverbindungen in Polyurethanen als Aldehydfänger beschrieben. Dabei wird die aktive Substanz direkt in die Polyolkomponente gegeben. In den Beispielen wird der Einsatz von Acethydrazid, Carbohydrazid und Adipinsäuredihydrazid beschrieben. Dadurch werden Reduktionen der Aldehydemissionen von 60 bis 70 % erhalten.

WO 2015082316 beschreibt den Einsatz von CH-Aciden Verbindungen der allgemeinen Formel R¹-CH₂-R², wobei R¹ und R² unabhängig voneinander für einen elektronenziehenden Rest steht, zur Reduktion von Formaldehydemissionen in Kombination mit einbaubaren Katalysatoren. Dabei kann Formaldehyd wirksam reduziert werden, allerdings zeigen die Schaumstoffproben immer noch hohe Emissionen flüchtiger, organischer Substanzen (VOC).

Aufgabe der vorliegenden Erfindung war es, Polyurethane, insbesondere Polyurethanschaumstoffe, zu liefern, die eine verringerte Aldehydemission, besonders Formaldehyd und Acetaldehyd, aufweisen. Insbesondere sollten die für die reduzierte Aldehydemission verantwortlichen Substanzen eine lang andauernde Wirksamkeit zeigen und zu keinen zusätzlichen Emissionen des Polyurethans führen. Weiter sollen die emissionarmen Polyurethanschaumstoffe durch ein einfaches Verfahren herstellbar sein, bei dem die Zugabe der für die Reduktion der Aldehydemmissionen verantwortlichen Substanzen direkt zu der Reaktionsmischung zur Herstellung des Polyurethans möglich ist. Insbesondere sollen dabei kostengünstige und einfach zu handhabende Stoffe zum Einsatz kommen, die die Herstellung der Polyurethane nicht beeinträchtigen.

Überraschenderweise konnte die erfindungsgemäße Aufgabe gelöst werden durch ein Verfahren zur Herstellung von Polyurethanen bei dem man (a) Polyisocyanat, (b) polymeren Verbindungen mit gegenüber Isocyanaten reaktiven Gruppen, (c) Katalysatoren, (d) Verbindungen der allgemeinen Formel R(-S)ₙ, wobei R für einen beliebigen Rest, n für eine beliebige Zahl von 1 bis 8 und S für einen Rest gemäß Formel 1 steht: 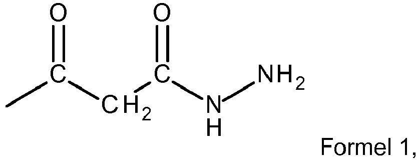 und gegebenenfalls (e) Treibmittel, (f) Kettenverlängerungs- und/oder Vernetzungsmittel und (g) Hilfsmittel und/oder Zusatzstoffe zu einer Reaktionsmischung vermischt und die Reaktionsmischung zum Polyurethan ausreagieren lässt. Weiter ist Gegenstand der vorliegenden Erfindung ein Polyurethan, erhältlich nach einem solchen Verfahren sowie die Verwendung des erfindungsgemäßen Polyurethans in geschlossenen Räumen, beispielsweise in Verkehrsmitteln.

Polyurethan im Sinn der Erfindung umfasst alle bekannten Polyisocyanat-Polyadditionsprodukte. Diese umfassen Additionsprodukte aus Isocyanat und Alkohol sowie modifizierte Polyurethane, die Isocyanurat-, Allophanat-, Harnstoff-, Carbodiimid-, Uretonimin-, Biuretstrukturen und weitere Isocyanatadditionsprodukte enthalten können. Diese erfindungsgemäßen Polyurethane umfassen insbesondere massive Polyisocyanat-Polyadditionsprodukte, wie Duromere, und Schaumstoffe auf Basis von Polyisocyanat-Polyadditionsprodukten, wie Weichschaumstoffe, Halbhartschaumstoffe, Hartschaumstoffe oder Integralschaumstoffe sowie Polyurethanbeschichtungen und Bindemittel. Weiter sind unter Polyurethanen im Sinn der Erfindung Polymerblends, enthaltend Polyurethane und weitere Polymere, sowie Schaumstoffe aus diesen Polymerblends zu verstehen. Vorzugsweise sind die erfindungsgemäßen Polyurethane Polyurethanschaumstoffe oder massive Polyurethane, die, abgesehen von den im Folgenden erläuterten Polyurethanbausteinen (a) bis (g) keine weiteren Polymere enthalten.

Im Rahmen der Erfindung werden unter Polyurethan-Schaumstoffen Schaumstoffe gemäß DIN 7726 verstanden. Dabei weisen erfindungsgemäße Polyurethan-Weichschaumstoffe eine Druckspannung bei 10 % Stauchung bzw. Druckfestigkeit nach DIN 53 421 / DIN EN ISO 604 von 15 kPa und kleiner, vorzugsweise 1 bis 14 kPa und insbesondere 4 bis 14 kPa auf. Erfindungsgemäße Polyurethan-Halbhartschaumstoffe weisen eine Druckspannung bei 10 % Stauchung nach DIN 53 421 / DIN EN ISO 604 von größer 15 bis kleiner 80 kPa auf. Erfindungsgemäße Polyurethan-Halbhartschaumstoffe und Polyurethan-Weichschaumstoffe verfügen nach DIN ISO 4590 über eine Offenzelligkeit von vorzugsweise größer 85 %, besonders bevorzugt größer 90 %. Weitere Details zu erfindungsgemäßen Polyurethan-Weichschaumstoffen und Polyurethan-Halbhartschaumstoffen finden sich im "Kunststoffhandbuch, Band 7, Polyurethane", Carl Hanser Verlag, 3. Auflage 1993, Kapitel 5.

Die erfindungsgemäßen Polyurethan-Hartschaumstoffe weisen eine Druckspannung bei 10 % Stauchung von größer gleich 80 kPa, bevorzugt größer gleich 120 kPa, besonders bevorzugt größer gleich 150 kPa auf. Weiterhin verfügt der Polyurethan-Hartschaumstoff nach DIN ISO 4590 über eine Geschlossenzelligkeit von größer 80%, bevorzugt größer 90 %. Weitere Details zu erfindungsgemäßen Polyurethan-Hartschaumstoffen finden sich im "Kunststoffhandbuch, Band 7, Polyurethane", Carl Hanser Verlag, 3. Auflage 1993, Kapitel 6. Unter elastomeren Polyurethan-Schaumstoffen sind im Rahmen dieser Erfindung Polyurethan-Schaumstoffe nach DIN 7726 zu verstehen, die nach kurzzeitiger Verformung um 50 % der Dicke nach DIN 53 577 nach 10 Minuten keine bleibende Verformung über 2 % ihrer Ausgangsdicke aufweisen. Dabei kann es sich um einen Polyurethan-Hartschaumstoff, einen Polyurethan-Halbhartschaumstoff oder einen Polyurethan-Weichschaumstoff handeln.

Bei Polyurethan-Integralschaumstoffen handelt es sich um Polyurethan-Schaumstoffe nach DIN 7726 mit einer Randzone, die bedingt durch den Formgebungsprozess eine höhere Dichte als der Kern aufweisen. Die über den Kern und die Randzone gemittelte Gesamtrohdichte liegt dabei vorzugsweise über 100 g/L. Auch bei Polyurethan-Integralschaumstoffen im Sinn der Erfindung kann es sich um Polyurethan-Hartschaumstoffe, Polyurethan-Halbhartschaumstoffe oder Polyurethan-Weichschaumstoffe handeln. Weitere Details zu erfindungsgemäßen Polyurethan-Integralschaumstoffen finden sich im "Kunststoffhandbuch, Band 7, Polyurethane", Carl Hanser Verlag, 3. Auflage 1993, Kapitel 7.

Dabei werden erfindungsgemäße Polyurethane erhalten indem man Polyisocyanate (a) mit polymeren Verbindungen mit gegenüber Isocyanaten reaktiven Gruppen (b), Katalysatoren (c), Verbindungen (d) der allgemeinen Formel R(-S)ₙ, wobei R für einen beliebigen Rest, n für eine beliebige Zahl von 1 bis 8 und S für einen Rest gemäß Formel 1 steht: 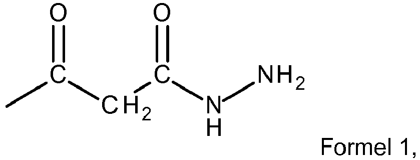 und gegebenenfalls Treibmittel (e), Kettenverlängerer (f) und sonstigen Hilfs- und Zusatzstoffen (g) zu einer Reaktionsmischung vermischt und ausreagieren lässt.

Dabei ist das erfindungsgemäße Polyurethan in einer bevorzugten Ausführungsform ein Polyurethanschaumstoff mit einer mittleren Dichte von 10 bis 850 g/L, vorzugsweise ein Polyurethanhalbhartschaumstoff oder ein Polyurethanweichschaumstoff oder ein Polyurethan-hartschaumstoff, besonders bevorzugt ein elastomerer Polyurethanweichschaumstoff ein Polyurethanhalbhartschaumstoff oder ein elastomerer Polyurethanintegralschaumstoff. Der elastomere Polyurethanintegralschaumstoff weist vorzugsweise eine über den Kern und die Randzone gemittelte Dichte von 150 bis 500 g/L auf. Der Polyurethanweichschaumstoff weist vorzugsweise eine mittlere Dichte von 10 bis 100 g/L auf. Der Polyurethanhalbhartschaumstoff weist vorzugsweise eine mittlere Dichte von 70 bis 150 g/L auf.

In einer weiteren bevorzugten Ausführungsform ist das Polyurethan ein massives Polyurethan mit einer Dichte von vorzugsweise mehr als 850 g/L, vorzugsweise 900 bis 1400 g/L und besonders bevorzugt 1000 bis 1300 g/L. Dabei wird ein massives Polyurethan ohne Zugabe eines Treibmittels erhalten. Geringe Mengen an Treibmittel, beispielsweise Wasser, das herstellungsbedingt in den Polyolen enthalten ist, ist dabei im Rahmen der vorliegenden Erfindung nicht als Treibmittelzugabe zu verstehen. Vorzugsweise enthält die Reaktionsmischung zur Herstellung des kompakten Polyurethans weniger als 0,2 Gew.-%, besonders bevorzugt weniger als 0,1 Gew.-% und insbesondere weniger als 0,05 Gew.-% Wasser.

Dabei wird das erfindungsgemäße Polyurethan vorzugsweise im Innenraum von Transportmitteln, wie Schiffen, Flugzeugen, LKW's, PKW's oder Bussen, besonders bevorzugt PKW's oder Bussen und insbesondere PKW's eingesetzt. Dabei wird der Innenraum von PKW's und Bussen im Folgenden als Automobilinnenraumteil bezeichnet. Ein Polyurethanweichschaumstoff kann dabei als Sitzpolster eingesetzt werden, ein Polyurethanhalbhartschaumstoff als Hinterschäumung von Tür-Seitenelementen oder Instrumententafeln, ein Polyurethanintegralschaumstoff als Lenkrad, Schaltknopf oder Kopfstütze und ein massives Polyurethan beispielsweise als Kabelummantelung.

Die zur Herstellung der erfindungsgemäßen Polyurethane verwendeten Polyisocyanatkomponenten (a) umfassen alle zur Herstellung von Polyurethanen bekannten Polyisocyanate. Diese umfassen die aus dem Stand der Technik bekannten aliphatischen, cycloaliphatischen und aromatischen zwei- oder mehrwertigen Isocyanate sowie beliebige Mischungen daraus. Beispiele sind 2,2'-, 2,4'- und 4,4'-Diphenylmethandiisocyanat, die Mischungen aus monomeren Diphenylmethandiisocyanaten und höherkernigen Homologen des Diphenylmethandiisocyanats (Polymer-MDI), Isophorondiisocyanat (IPDI) oder dessen Oligomere, 2,4- oder 2,6-Toluylendiisocyanat (TDI) oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus.

Bevorzugt werden 2,4- und/oder 2,6-Tolylendiisocynat (TDI) oder deren Mischungen, monomere Diphenylmethandiisocyanate und/oder höherkernige Homologe des Diphenylmethandiisocyanats (Polymer-MDI) und deren Mischungen verwendet. Weitere mögliche Isocyanate sind beispielsweise im "Kunststoffhandbuch, Band 7, Polyurethane", Carl Hanser Verlag, 3. Auflage 1993, Kapitel 3.2 und 3.3.2 angegeben.

Die Polyisocyanatkomponente (a) kann in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polymeren Verbindungen mit gegenüber Isocyanaten reaktiven Gruppen (b) (Bestandteil (a-2)) und/oder Kettenverlängerern (c) (Bestandteil (a-3)) zum Isocyanatprepolymer umgesetzt werden.

Polymere Verbindungen mit gegenüber Isocyanaten reaktiven Gruppen (a-2) und Kettenverlängerungsmittel (a3) sind dem Fachmann bekannt und beispielsweise beschrieben im "Kunststoffhandbuch, 7, Polyurethane", Carl Hanser-Verlag, 3. Auflage 1993, Kapitel 3.1. So können beispielsweise als Polymere Verbindungen mit gegenüber Isocyanaten reaktiven Gruppen (a-2) auch die nachfolgend unter (b) beschriebenen Polymere Verbindungen mit gegenüber Isocyanaten reaktiven Gruppen eingesetzt werden.

Als polymere Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 400 bis 15000 g/mol. So können beispielsweise Verbindungen, ausgewählt aus der Gruppe der Polyetherpolyole, Polyesterpolyole oder Mischungen daraus, verwendet werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Neben den beschriebenen Polyetherolen und Polyesterolen können auch füllstoffhaltige Polyetherole oder Polyesterole, auch als Polymerpolyetherole oder Polymerpolyesterole bezeichnet, eingesetzt werden. Solche Verbindungen enthalten vorzugsweise dispergierte Partikel aus thermoplastischen Kunststoffen, beispielsweise aufgebaut aus olefinischen Monomeren, wie Acrylnitril, Styrol, (Meth)Acrylaten, (Meth)Acrylsäure und/oder Acrylamid. Solche Füllstoffhaltigen Polyole sind bekannt und kommerziell erhältlich. Ihre Herstellung ist beispielweise beschrieben in DE 111 394, US 3 304 273, US 3 383 351, US 3 523 093, DE 1 152 536, DE 1 152 537 WO 2008/055952 und WO2009/128279.

In einer besonders bevorzugten Ausführungsform der vorliegenden Erfindung enthält die Komponente (b) Polyetherole und weiter bevorzugt keine Polyesterole.

Katalysatoren c) beschleunigen die Reaktion der Polyole (b) und gegebenenfalls Kettenverlängerungs- und Vernetzungsmittel (f) sowie chemischem Treibmittel (e) mit den organischen, gegebenenfalls modifizierten Polyisocyanaten (a) stark. Dabei enthalten die Katalysatoren (c) vorzugsweise einbaubare Aminkatalysatoren.

Als übliche Katalysatoren, die zur Herstellung der Polyurethane eingesetzt werden können, seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan, und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin, genannt. Ebenso kommen organische Metallverbindungen in Betracht, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismutoctanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Einbaubare Aminkatalysatoren weisen mindestens eine, vorzugsweise 1 bis 8 und besonders bevorzugt 1 bis 2 gegenüber Isocyanaten reaktive Gruppen, wie primäre Amingruppen, sekundäre Amingruppen, Hydroxylgruppen, Amide oder Harnstoffgruppen, vorzugsweise primäre Amingruppen, sekundäre Amingruppen, Hydroxylgruppen, auf. Einbaubare Aminkatalysatoren werden meist zur Herstellung emissionsarmer Polyurethane eingesetzt, die insbesondere im Automobilinnenbereich eingesetzt werden. Solche Katalysatoren sind bekannt und beispielsweise in EP1888664 beschrieben. Diese umfassen Verbindungen, die neben der bzw. den gegenüber Isocyanaten reaktiven Gruppen vorzugsweise eine oder mehrere tertiäte Aminogruppen aufweisen. Vorzugsweise trägt mindestens eine der tertiären Aminogruppen der einbaubaren Katalysatoren mindestens zwei aliphatische Kohlenwasserstoffreste, vorzugsweise mit 1 bis 10 Kohlenstoffatomen je Rest, besonders bevorzugt mit 1 bis 6 Kohlenstoffatomen je Rest. Besonders bevorzugt tragen die tertiären Aminogruppen zwei Reste, unabhängig voneinander ausgewählt aus Methyl- und Ethylrest sowie einen weiteren organischen Rest. Beispiele für einsetzbare einbaubare Katalysatoren sind Bisdimethylaminopropylharnstoff, Bis(N,N-Dimethylaminoethoxyethyl)carbamat, Dimethylaminopropylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Dimethyaminopropyl-N,N-dimethylpropan-1,3-diamin, Dimethyl-2-(2-aminoethoxyethanol), (1,3-Bis(dimethylamino)-propan-2-ol), N,N-Bis-(3-dimethylamino-propyl)-N-isopropanolamin, Bis-(dimethylaminopropyl)-2-hydroxyethylamin, N,N,N-Trimethyl-N-(3 aminopropyl)-bis(aminoethylether), 1,4-Diazabicyclo[2.2.2]octane-2-methanol und 3-Dimethylaminoisopropyl-diisopropanolamin oder Mischungen davon.

Katalysatoren (c) können beispielsweise in einer Konzentration von 0,001 bis 5 Gew.-%, insbesondere 0,05 bis 2 Gew.-% als Katalysator bzw. Katalysatorkombination, bezogen auf das Gewicht der Komponente (b), eingesetzt werden. In einer besonders bevorzugten Ausführungsform werden als Katalysatoren (c) ausschließlich einbaubare Katalysatoren eingesetzt.

Als Komponente (d) wird eine Verbindung der allgemeinen Formel R(-S)ₙ eingesetzt, wobei R für einen beliebigen Rest, n für eine beliebige Zahl von 1 bis 8 und S für einen Rest gemäß Formel 1 steht:

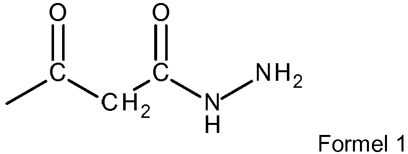

Vorzugsweise enthält der Rest R Wasserstoffatome und Kohlenstoff, Stickstoff und/oder Sauerstoffatome. Beispielsweise kann R für einen Kohlenwasserstoffrest, einen Polyetherrest oder einen Polyesterrest stehen, beispielsweise einen Polyetherrest oder Polyesterrest der einer der polymeren Verbindungen mit gegenüber isocyanat reaktiven Gruppen (b) entspricht, wobei eines oder mehrere der endständigen Wasserstoffatome durch eine Verbindung der allgemeinen Formel (1) ersetzt ist. Bei n=1 steht R beispielsweise für einen Rest, ausgewählt ist aus der Gruppe bestehend aus -NH₂, -NH-NH₂, -NH-NH-R³, -NH-R⁴, -NR⁵R⁶, -OR⁷ oder -R⁸, wobei R³, R⁴, R⁵, R⁶, R⁷ und R⁸ unabhängig ausgewählt sind aus der Gruppe bestehend aus aliphatischen, araliphatischen oder aromatischen Kohlenwasserstoffen, die substituiert sein können, und n für eine ganze Zahl von 1 bis 8, vorzugsweise 1 bis 6. In einer bevorzugten Ausführungsform steht für n=1 R für-CH₃, -OCH₃, -C₂H₅, -OC₂H₅, -C₃H₇, - OC₃H7, -CₗH₂ₗ+₁, -O-CₗH₂ₗ+₁, -O-CₗH₂ₗOH, -O-(C₂H₄O)ₘH, -O-(C₃H₆O)ₘH, -O-(C₄H₈O)ₘH, - NHCH₃, -NH-CₗH₂ₗ+₁, -NH-(C₂H₄O)ₘH, -NH-(C₃H₆O)ₘH, -NH-CₗH₂ₗ-NH₂, -NH-CₗH₂ₗ-OH, -NH-(C₂H₄O)ₘ-C₂H₄NH₂, -NH-(C₃H₆O)ₘ-C₃H₆NH₂, -NH-(C₄H₈O)ₘ-C₄H₈NH₂, -NH-NH-CₗH₂ₗ₊₁, -NH-NH-CₗH₂ₗOH, -NH-NH-CₗH₂ₗNH₂, -NH-NH-(C₂H₄O)ₘH, -NH-NH-(C₂H₄O)ₘ-C₂H₄NH₂, -NH-NH-(C₃H₆O)ₘH, -NH-NH-(C₃H₆O)ₘ-C₃H₆NH₂, -NH₂ und besonders bevorzugt für -NH-NH₂. Dabei steht l für ganze Zahlen von 1 bis 20, vorzugsweise 1 bis 10 und m für ganze Zahlen von 1 bis 50, bevorzugt von 1 bis 25.

Für n= 2 bis 8, vorzugsweise n=2 bis 6, und besonders bevorzugt n=2 entspricht die Verbindung (d) vorzugsweise der allgemeinen Formel 2: 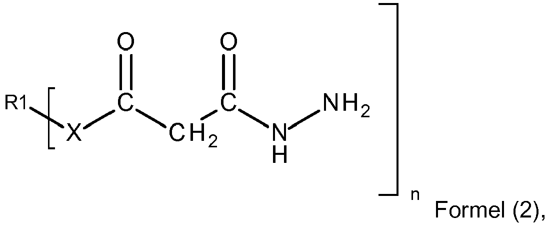 wobei X für O, S, NH-NH, oder N-R² steht, wobei R² ausgewählt ist aus der Gruppe, bestehend aus Wasserstoff, aliphatischen, araliphatischen oder aromatischen Kohlenwasserstoffen, die substituiert sein können und vorzugsweise für Wasserstoff steht. R¹ steht für einen Kohlenwasserstoffrest, der substituiert sein kann und vorzugsweise für einen Polyetherrest vorzugsweise auf Basis von Etylenoxid oder Propylenoxid, oder einen Polyesterrest, jeweils mit der Funktionalität n, beispielsweise einen Polyetherrest oder Polyesterrest der einer der polymeren Verbindungen mit gegenüber Isocyanat reaktiven Gruppen (b) entspricht.

In einer besonders bevorzugten Ausführungsform wird die Verbindung der allgemeinen Formel 2 durch die Veresterung eines mehrwertigen Alkohols, beispielsweise eines Glycols, wie Ethylenglycol oder Propylenglycol, eines oligomeren mehrwertigen Alkohols, wie Diethylenglycol, Triethylenglycol , Dipropylengylcol oder Triethylenglycol oder eines polymeren Alkylenoxids oder hoherwertiger Alkohole, wie Trimethylolpropan, Gylcerin, Neopentylglykol, 2-methyl-1,3-prpandiol, 3-methyl-1,5-pentandiol,1,4-butandiol, 1,6-hehandiol, Pentaerythrite, Sorbitol, oder Saccharose mit einer Verbindungen der Formel 3 erhalten: 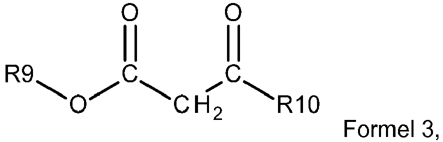 wobei und R⁹ für ein Wasserstoffatom oder einen Alkylrest, vorzugsweise einen Methyl-, einen Ethyl- oder einen Propylrest steht und R¹⁰ für -OR⁹, OH oder für -NH-NH₂ steht. Falls R¹⁰ für OH oder -OR⁹ steht, wird die Verbindung der allgemeinen Formel 1 durch anschließende Umsetzung mit H₂N-NH₂ erhalten.

In einer ganz besonders bevorzugten Ausführungsform wird Malonsäuredihydrazid als Verbindung (d) eingesetzt. Dieses entspricht der chemischen Formel:

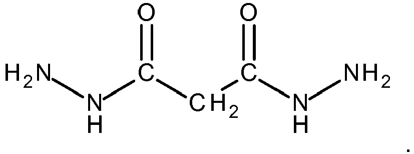

Die Verbindung (d) der allgemeinen Formel R(-S)ₙ wird im Rahmen der vorliegenden Erfindung vorzugsweise in Mengen von 0,01 bis 5 Gew.-%, besonders bevorzugt 0,05 bis 2 Gew.-% und insbesondere 0.1 bis 1 Gew.-%, bezogen auf das Gesamtgewicht der Komponenten (a) bis (f), eingesetzt. Dabei kann die Verbindung (d) als Reinsubstanz oder in Form einer Lösung oder einer Dispersion eingesetzt werden. Als Lösungs- / Dispersionsmittel können beispielsweise Kettenverlängerungs- oder Vernetzungsmittel (f), polymere Verbindungen oder Verbindungen mit gegenüber Isocyanaten reaktiven Gruppen (b), Polyisocyanate (a) oder Wasser eingesetzt werden. Weiter können auch die Isocyanate (a) als Lösungs- oder Dispersionsmittel eingesetzt werden, insbesondere für Verbindungen (d), die keinen negativen Einfluss auf die Lagerstabilität der Isocyanate (a) haben. Besonders bevorzugt wird die Verbindung (d) in Form einer Wasserlösung eingesetzt.

Wenn das erfindungsgemäße Polyurethan als Polyurethan-Schaumstoff vorliegen soll, enthalten erfindungsgemäße Reaktionsmischungen noch Treibmittel (e). Dabei können alle zur Herstellung von Polyurethanen bekannten Treibmittel eingesetzt werden. Diese können chemische und/oder physikalische Treibmittel enthalten. Solche Treibmittel werden beispielsweise im "Kunststoffhandbuch, Band 7, Polyurethane", Carl Hanser Verlag, 3. Auflage 1993, Kapitel 3.4.5 beschrieben. Unter chemischen Treibmitteln werden dabei Verbindungen verstanden, die durch Reaktion mit Isocyanat gasförmige Produkte bilden. Beispiele für solche Treibmittel sind Wasser oder Carbonsäuren. Unter physikalischen Treibmitteln werden dabei Verbindungen verstanden, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe und andere Verbindungen, wie zum Beispiel perfluorierte Alkane, wie Perfluorhexan, Fluorchlorkohlenwasserstoffe, und Ether, Ester, Ketone, Acetale und/oder flüssiges Kohlendioxid. Dabei kann das Treibmittel in jeder beliebigen Menge eingesetzt werden. Vorzugsweise wird das Treibmittel in einer Menge eingesetzt, dass der resultierende Polyurethanschaumstoff eine Dichte von 10 bis 850 g/L, besonders bevorzugt 20 bis 800 g/L und insbesondere 25 bis 500 g/L aufweist. Besonders bevorzugt werden Treibmittel, enthaltend Wasser eingesetzt.

Als Kettenverlängerer und Vernetzungsmittel (f) können Verbindungen mit mindestens zwei gegenüber Isocyanaten reaktiven Gruppen eingesetzt werden, die ein Molekulargewicht von weniger als 400 g/mol aufweisen, wobei Moleküle mit zwei gegenüber Isocyanat reaktiven Wasserstoffatomen als Kettenverlängerer und Moleküle mit mehr als zwei gegenüber Isocyanat reaktiven Wasserstoffen als Vernetzer bezeichnet werden. Dabei kann jedoch auch auf das Kettenverlängerungs- oder Vernetzungsmittel verzichtet werden. Zur Modifizierung der mechanischen Eigenschaften, z.B. der Härte, kann sich allerdings der Zusatz von Kettenverlängerungsmitteln, Vernetzungsmitteln oder gegebenenfalls auch Gemischen davon als vorteilhaft erweisen.

Wenn Kettenverlängerer und/oder Vernetzungsmittel eingesetzt werden sollen, werden diese üblicherweise in Mengen von 0,5 bis 60 Gew.-%, vorzugsweise 1 bis 40 Gew.-% und besonders bevorzugt 1,5 bis 20 Gew.-%, jeweils bezogen auf das Gesamtgewicht der Komponenten (b) bis (f), eingesetzt.

Werden Kettenverlängerungsmittel und/oder Vernetzungsmittel (f) eingesetzt, können die bei der Herstellung von Polyurethanen bekannten Kettenverlängerer und/oder Vernetzer eingesetzt werden. Dies sind vorzugsweise niedermolekulare Verbindungen mit gegenüber Isocyanaten reaktiven funktionellen Gruppen, beispielsweise Glycerin, Trimethylolpropan, Glycol und Diamine. Weitere mögliche niedermolekulare Kettenverlängerungsmittel und/oder Vernetzungsmittel sind beispielsweise im "Kunststoffhandbuch, Band 7, Polyurethane", Carl Hanser Verlag, 3. Auflage 1993, Kapitel 3.2 und 3.3.2 angegeben.

Weiter können Hilfsmittel und/oder Zusatzstoffe (g) eingesetzt werden. Dabei können alle zur Herstellung von Polyurethanen bekannten Hilfs- und Zusatzstoffe verwendet werden. Genannt seien beispielsweise oberflächenaktive Substanzen, Schaumstabilisatoren, Zellregler, Trennmittel, Füllstoffe, Farbstoffe, Pigmente, Flammschutzmittel, Hydrolyseschutzmittel, fungistatische und bakteriostatisch wirkende Substanzen. Solche Substanzen sind bekannt und beispielsweise in "Kunststoffhandbuch, Band 7, Polyurethane", Carl Hanser Verlag, 3. Auflage 1993, Kapitel 3.4.4 und 3.4.6 bis 3.4.11 beschrieben.

Im Allgemeinen werden bei der Herstellung des erfindungsgemäßen Polyurethans die Polyisocyanate (a), die Polyole (b), Verbindungen (d) der allgemeinen Formel R(-S)ₙ, wobei R, S und n wie oben angegeben definiert sind, und, falls eingesetzt die Treibmittel (e) und Kettenverlängerungsmittel und/oder Vernetzungsmittel (f) in solchen Mengen zur Umsetzung gebracht, dass das Äquivalenz-Verhältnis von NCO-Gruppen der Polyisocyanate (a) zur Summe der reaktiven Wasserstoffatome der Komponenten (b), (c), (d) und gegebenenfalls (e) und (f) 0,75 bis 1,5:1, vorzugsweise 0,80 bis 1,25:1 beträgt. Falls die zelligen Kunststoffe zumindest teilweise Isocyanuratgruppen enthalten, wird üblicherweise ein Verhältnis von NCO-Gruppen der Polyisocyanate (a) zur Summe der reaktiven Wasserstoffatome der Komponente (b), (c), (d) und gegebenenfalls (e) und (f) von 1,5 bis 20:1, vorzugsweise 1,5 bis 8:1 verwendet. Ein Verhältnis von 1:1 entspricht dabei einem Isocyanatindex von 100.

Die speziellen Ausgangssubstanzen (a) bis (g) für die Herstellung von erfindungsgemäßen Polyurethanen unterscheiden sich jeweils quantitativ und qualitativ nur geringfügig wenn als erfindungsgemäßes Polyurethan ein thermoplastisches Polyurethan, ein Weichschaumstoff, ein Halbhartschaumstoff, ein Hartschaumstoff oder ein Integralschaumstoff hergestellt werden soll. So werden beispielsweise für die Herstellung von massiven Polyurethanen keine Treibmittel eingesetzt sowie für thermoplastisches Polyurethan überwiegend streng difunktionelle Ausgangssubstanzen eingesetzt. Weiter lässt sich beispielsweise über die Funktionalität und die Kettenlänge der höhermolekularen Verbindung mit mindestens zwei reaktiven Wasserstoffatomen die Elastizität und Härte des erfindungsgemäßen Polyurethans variieren. Solche Modifikationen sind dem Fachmann bekannt.

Die Edukte für die Herstellung eines massiven Polyurethans werden beispielsweise in EP 0989146 oder EP 1460094, die Edukte für die Herstellung eines Weichschaums in PCT/EP2005/010124 und EP 1529792, die Edukte für die Herstellung eines Halbhartschaums im "Kunststoffhandbuch, Band 7, Polyurethane", Carl Hanser Verlag, 3. Auflage 1993, Kapitel 5.4, die Edukte für die Herstellung eines Hartschaumstoffs in PCT/EP2005/010955 und die Edukte für Herstellung eines Integralschaumstoffs in EP 364854, US 5506275 oder EP 897402 beschrieben. Zu den in diesen Dokumenten beschriebenen Edukten wird dann jeweils noch die Verbindungen (d) zugegeben.

Neben dem erfindungsgemäßen Verfahren ist auch ein Polyurethan, erhältlich nach einem erfindungsgemäßen Verfahren Gegenstand der Erfindung. Die erfindungsgemäßen Polyurethane werden vorzugsweise in geschlossenen Räumen eingesetzt, beispielsweise als thermische Isoliermaterialien in Wohngebäuden, wie Isolierungen für Rohre und Kühlschränke, im Möbelbau, beispielsweise als Dekorelemente oder als Sitzpolster, als Matratzen sowie im Innenraum von Fahrzeugen, beispielsweise im Automobilinnenraum, beispielsweise als Lenkräder, Armaturenbretter, Türverkleidungen, Teppichhinterschäumungen, akustische Schaumstoffe, wie Dachhimmel, sowie Kopfstützen oder Schaltknäufe. Dabei sind für erfindungsgemäße Polyurethane sowohl die Formaldehyd als auch Acetaldehydemissionen deutlich gegenüber einem Referenzprodukt ohne Additiv aber auch gegenüber Additiven zur Aldehydreduktion aus dem Stand der Technik reduziert. Weiter emittieren erfindungsgemäße Polyurethane nur sehr geringe Mengen an flüchtigen, organischen Verbindungen (VOC) gemäß VDA 278 und VDA 277. Dabei sind Verbindungen (d) und insbesondere Malonsäuredihydrazid temperaturstabil. Dadurch verliert diese Verbindung auch bei Reaktionstemperaturen von bis zu 200 °C, die bei der Herstellung bestimmter Polyurethanschaumstoffe auftreten können, nicht an Aktivität.

Die Erfindung soll im Folgenden anhand von Beispielen verdeutlicht werden.

### Ausgangsmaterialien:

| | |
|---|---|
| Polyol 1: | Glyceringestartetes Polyetherpolyol auf Basis von Ethylenoxid und Propylenoxid mit einer mittleren OH-Zahl von 27 mg KOH/g, einer mittleren Funktionalität von 2,5 und einem Propylenoxidgehalt, bezogen auf das Gesamtgewicht des Polyethers, von 78 Gew.-%. |
| Polyol 2: | Glyceringestartetes Polyetherpolyol auf Basis von Ethylenoxid und Propylenoxid mit einer mittleren OH-Zahl von 35 mg KOH/g, einer mittleren Funktionalität von 2,7 und einem Propylenoxidgehalt, bezogen auf das Gesamtgewicht des Polyethers, von 85 Gew.-%. |
| Polyol 3: | Glyceringestartetes Polyetherpolyol auf Basis von Ethylenoxid und Propylenoxid mit einer mittleren OH-Zahl von 42 mg KOH/g, einer mittleren Funktionalität von 2,7 und einem Propylenoxidgehalt, bezogen auf das Gesamtgewicht des Polyethers, von 25 Gew.-%. |
| Polyol 4: | Glyceringestartetes Polyetherpolyol auf Basis von Ethylenoxid und Propylenoxid mit einer mittleren OH-Zahl von 28 mg KOH/g, einer mittleren Funktionalität von 2,7 und einem Propylenoxidgehalt, bezogen auf das Gesamtgewicht des Polyethers, von 84 Gew.-%. |
| Polyol 5: | Polyetherpolyol mit einer OH-Zahl 250 mg KOH/g und einer mittleren Funktionalität von 2,0 auf Basis von Polyol 4 (35 Gew.-%), Propylenoxid (45 Gew.-%) und Dimethylaminopropylamin (20 Gew.-%). |
| Polyol 6: | Polyesterpolyol aus Adipinsäure, 1,4-Butandiol, Isopththalsäure und Monoethylenglykol mit einer mittleren OH-Zahl von 55 mg KOH/g. |
| TEOA: | Triethanolamin |
| Isopur SU-12021: | Schwarzpaste der Firma ISL-Chemie |
| Emulgator: | Halbester eines Maleinsäure-Olefin-Copolymers |
| Jeffcat® ZF10: | Katalysator der Firma Huntsman |

### Additive

| | |
|---|---|
| V1: | Adipinsäuredihydrazide |
| V2: | Bernsteinsäuredihydrazid |
| V3: | Carbodihydrazide |
| V4: | Acethydrazide |
| V5: | Trimethylolpropan-triacetoacetat |
| A1: | Malonsäuredihydrazid |

Iso 1: Polymeres Diphenylmethandiisocyanat (PMDI) mit einem NCO-gehalt von 31,5 Gew.-% und einer mittleren Funktionalität von 2,7.
Iso 2: Prepolymer aus Methylendiphenyldiisocyanat, dipropyleneglykol und polyetherpolyol mit einer mittleren OH-Zahl von 250 mg KOH/g, einer Funktionalität von 2 und einem Propylenoxydgehalt, bezogen auf das Gesamtgewicht des Polyethers, von 83 Gew.-%, NCO-Gehalt von 23 Gew.-% und einer mittleren Funktionalität von 2.
Iso 3: Mischung aus Methylendiphenyldiisocyanat und dem entsprechenden Carbodiimid mit einem NCO-Gehalt von 29,5 Gew.-% und einer mittleren Funktionalität von 2,2.

Die Mischung A wurde durch Vermischen von folgenden Komponenten hergestellt:

| | |
|---|---|
| 50.0 | Gew.-Teile Polyol 1 |
| 34.3 | Gew.-Teile Polyol 2 |
| 2.0 | Gew.-Teile Polyol 3 |
| 3.0 | Gew.-Teile Polyol 5 |
| 6.0 | Gew.-Teile Polyol 6 |
| 0.5 | Gew.-Teile TEOA |
| 0.5 | Gew.-Teile Emulgator |
| 0.5 | Gew.-Teile Isopur SU-12021 |
| 2.9 | Gew.-Teile Wasser |
| 0.3 | Gew.-Teile Jeffcat ZF10 |
| 0.3-1.2 | Gew.-Teile Verbindungen V1-V5 und A1 gemäß Tabelle 1 |

Dabei wurden die Additive V1-V4 und A1 in Form wässrigen Lösungen eingesetzt, V5 wurde als Reinsubstant in flüssiger Form eingesetzt. Der Gesamtwassergehalt der Mischung A wurde auf 2,9 Gew.-Teile eingestellt.

Die Isocyanat Komponente wurde durch Vermischen von folgenden Komponenten hergestellt:

| | |
|---|---|
| 30.0 | Gew.-Teile Iso 1 |
| 35.0 | Gew.-Teile Iso 2 |
| 35.0 | Gew.-Teile Iso 3 |

Die Mischung A und die Isocyanat-Komponente sowie die Additive gemäß Tabelle 1 wurden bei einem Isocyanatindex von 100 miteinander vermischt und in eine geschlossene Form gegeben, so dass Formteile mit einer mittleren Dichte von 120 g/L erhalten wurden.

Zur Bestimmung von Formaldehyd und Acetaldehyd wurde analog ASTM D-5116-06 vorgegangen. Die Kammergröße betrug 4,7 Litern. Als Polyurethanproben wurden Stücke mit einer Größe von 110 mm x 100 mm x 25 mm aus dem Innern des Schaumstoffs eingesetzt. Die Temperatur in der Meßkammer betrug während der Messung 65 °C, die relative Luftfeuchtigkeit 50 %. Die Luftaustauschrate betrug 3,0 Liter pro Stunde. Der Abluftstrom mit flüchtigen Aldehyden aus dem Polyurethan wurden über 120 Minuten durch eine Kartusche mit 2,4-Dinitrophenylhydrazin beschichtetes Silika geleitet. Die DNPH-Kartusche wurde anschließend mit einem Gemisch von Acetonitril und Wasser eluiert. Die Konzentration von Formaldehyd und Acetaldehyd im Eluat wurde mittels HPLC bestimmt. Nach diesem Aufbau liegt die Nachweisgrenze für Formaldehydemissionen bei ≤ 11 µg/m³. und für Acetaldehydemissionen bei ≤ 6 µg/m³

Tabelle 1: In der Kammer bestimmte Formaldehydwerte von Halbhart-Schäume ohne Zugabe von Additiven (Referenz) sowie bei Zugabe der jeweiligen Additiven V1 - V5 und A1 in den angegebenen Konzentrationen, jeweils angegeben in Gewichtsteilen der oben Angegebenen Mischung A.

**Tabelle 1**

| | Gew.-Teile. in A | Formaldehyd (µg/m³) | Acetaldehyd (µg)³) |
|---|---|---|---|
| Referenz | - | 605 | 266 |
| V1 | 0.3% | 338 | 113 |
| V2 | 0.3% | 177 | 157 |
| V3 | 0.7% | 63 | 131 |
| V4 | 1.2% | 369 | 195 |
| V5 | 0.3% | 263 | 235 |
| A1 | 0.3% | < NG | 77 |

Tabelle 1 zeigt, dass durch den Einsatz des erfindungsgemäßen Additivs A1 (Malonsäuredihydrazid) selbst bei geringen Konzentrationen von 0,3 Gew.-Teilen in der Mischung A die Formaldehydemissionen auf Werte unterhalb der Nachweisgrenze von 11 µg/m³ reduziert werden. Weiter werden durch das Additiv A1 ebenfalls die Acetaldehydemissionen wesentlich reduziert.

Weiter führt der Einsatz von Malonsäuredihydrazid nicht zu einer Erhöhung der flüchtigen organischen Verbindungen VOC gemäß VDA 277. Dis ist in Tabelle 2 belegt:

**Tabelle 2**

| | Gew.-Teile in A | VOC Total (ppm) |
|---|---|---|
| Referenz | - | 10 |
| V5 | 0.3 | 72 |
| A1 | 0.3 | 10 |

## Patentansprüche

1. Verfahren zur Herstellung von Polyurethanen bei dem man
(a) Polyisocyanat,
(b) polymeren Verbindungen mit gegenüber Isocyanaten reaktiven Gruppen,
(c) Katalysatoren,
(d) Verbindungen der allgemeinen Formel R(-S)ₙ und gegebenenfalls
(e) Treibmittel,
(f) Kettenverlängerungs- und oder Vernetzungsmittel und
(g) Hilfsmittel und/oder Zusatzstoffe
zu einer Reaktionsmischung vermischt und die Reaktionsmischung zum Polyurethan ausreagieren lässt,
wobei R für einen beliebigen Rest, n für eine beliebige Zahl von 1 bis 8 und S für einen Rest gemäß Formel 1 steht:

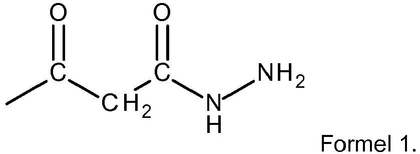

2. Verfahren nach Anspruch 1, **dadurch gekennzeichnet, dass** für die Verbindung R(-S)ₙ (d) der allgemeinen Formel (2) entspricht 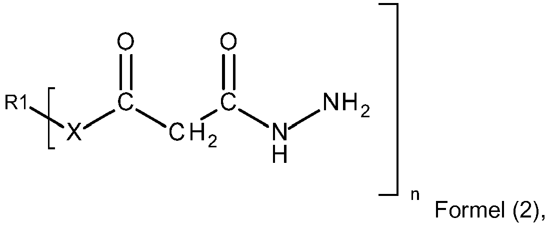 wobei X für O, S, NH-NH, oder N-R² steht, wobei R² ausgewählt ist aus der Gruppe, bestehend aus Wasserstoff, aliphatischen, araliphatischen oder aromatischen Kohlenwasserstoffen, die substituiert sein können, und R1 für einen Kohlenwasserstoffrest, der substituiert sein kann, steht.

3. Verfahren nach Anspruch 1 **dadurch gekennzeichnet, dass** die Verbindung der allgemeinen Formel R(-S)ₙ der Komponente (d) Malonsäuredihydrazid ist.

4. Verfahren nach einem der Ansprüche 1 bis 3, **dadurch gekennzeichnet, dass** die Komponente (d), bezogen auf das Gesamtgewicht der Komponenten (a) bis (f) zu 0.01 bis 5 Gew.-% enthalten ist.

5. Verfahren nach einem der Ansprüche 1 bis 4, **dadurch gekennzeichnet, dass** die polymeren Verbindungen mit gegenüber Isocyanaten reaktiven Gruppen (b) Polyetherole enthalten.

6. Verfahren nach einem der Ansprüche 1 bis 5, **dadurch gekennzeichnet, dass** die Katalysatoren (c) einbaubare Aminkatalysatoren enthalten.

7. Verfahren nach Anspruch 6, **dadurch gekennzeichnet, dass** als einbaubare Katalysatoren Verbindungen eingesetzt werden, die neben der bzw. den gegenüber Isocyanaten reaktiven Gruppen eine oder mehrere tertiäre, aliphatische Aminogruppen aufweisen.

8. Verfahren nach Anspruch 7, **dadurch gekennzeichnet, dass** mindestens eine tertiäre Aminogruppe des einbaubaren Katalysators zwei Reste, unabhängig voneinander ausgewählt aus Methyl- und Ethylrest, sowie einen weiteren organischen Rest trägt.

9. Verfahren nach einem der Ansprüche 1 bis 8, **dadurch gekennzeichnet, dass** das Polyurethan ein Polyurethanschaumstoff mit einer mittleren Dichte von 10 bis 850 g/L ist.

10. Verfahren nach einem der Ansprüche 1 bis 9, **dadurch gekennzeichnet, dass** das Polyurethan ein kompaktes Polyurethan mit einer mittleren Dichte von mehr als 850 g/L ist.

11. Verfahren nach einem der Ansprüche 1 bis 10, **dadurch gekennzeichnet, dass** das Polyurethan eine Matratze oder Teil eines Möbelstücks ist.

12. Polyurethan, herstellbar nach einem Verfahren gemäß einem der Ansprüche 1 bis 11.

13. Verwendung von Polyurethanen nach Anspruch 12 in geschlossenen Räumen.

14. Verwendung nach Anspruch 13, wobei der geschlossene Raum der Innenraum von Verkehrsmitteln ist.

## Claims

1. A process for the production of polyurethanes where
(a) polyisocyanate,
(b) polymeric compounds having groups reactive toward isocyanates,
(c) catalysts,
(d) compounds of the general formula R(-S)ₙ, and optionally
(e) blowing agents,
(f) chain extenders and/or crosslinking agents, and
(g) auxiliaries and/or additional substances
are mixed to give a reaction mixture, and the reaction mixture is reacted to completion to give the polyurethane,
where R is any desired moiety, n is any desired number from 1 to 8, and S is a moiety of formula 1:

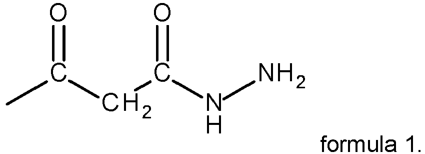

2. The process according to claim 1, wherein the compound R(-S)ₙ (d) corresponds to the general formula (2) 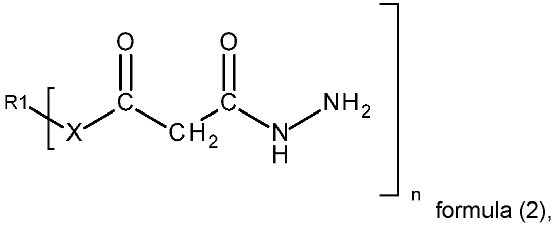 where X is O, S, NH-NH, or N-R², where R² is selected from the group consisting of hydrogen, aliphatic, araliphatic and aromatic hydrocarbons, which can have substitution, and R1 is a hydrocarbon moiety which can have substitution.

3. The process according to claim 1, wherein the compound of the general formula R(-S)ₙ of component (d) is malonic dihydrazide.

4. The process according to any of claims 1 to 3, wherein the quantity of component (d) comprised, based on the total weight of components (a) to (f), is from 0.01 to 5% by weight.

5. The process according to any of claims 1 to 4, wherein the polymeric compounds (b) having groups reactive toward isocyanates comprise polyetherols.

6. The process according to any of claims 1 to 5, wherein the catalysts (c) comprise incorporable amine catalysts.

7. The process according to claim 6, wherein incorporable catalysts used comprise compounds having, alongside the group(s) reactive toward isocyanates, one or more tertiary aliphatic amino groups.

8. The process according to claim 7, wherein at least one tertiary amino group of the incorporable catalyst bears two moieties mutually independently selected from methyl and ethyl moiety, and also bears a further organic moiety.

9. The process according to any of claims 1 to 8, wherein the polyurethane is a polyurethane foam with average density from 10 to 850 g/L.

10. The process according to any of claims 1 to 9, wherein the polyurethane is a compact polyurethane with average density more than 850 g/L.

11. The process according to any of claims 1 to 10, wherein the polyurethane is a mattress or part of an item of furniture.

12. A polyurethane which can be produced by a process according to any of claims 1 to 11.

13. The use of polyurethanes according to claim 12 in enclosed spaces.

14. The use according to claim 13, wherein the enclosed space is the space within means of conveying.

## Revendications

1. Procédé pour la préparation de polyuréthanes, dans lequel on mélange
(a) du polyisocyanate,
(b) des composés polymères présentant des groupes réactifs par rapport aux isocyanates,
(c) des catalyseurs,
(d) des composés de formule générale R(-S)ₙ et le cas échéant
(e) des agents gonflants,
(f) des agents d'allongement de chaîne et/ou des réticulants et
(g) des adjuvants et/ou des additifs,
en un mélange réactionnel et on laisse réagir le mélange réactionnel en polyuréthane,
R représentant un radical quelconque, n représentant un nombre quelconque de 1 à 8 et S représentant un radical selon la formule 1 :

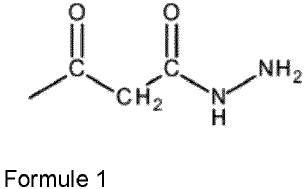

2. Procédé selon la revendication 1, **caractérisé en ce que** le composé R(-S)ₙ (d) correspond à la formule générale 2 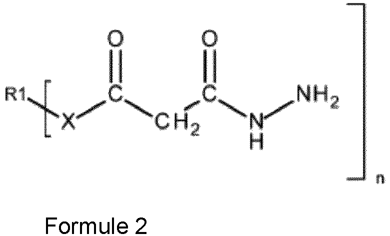 dans laquelle X représente O, S, NH-NH, ou N-R², R² étant choisi dans le groupe constitué par hydrogène, les hydrocarbures aliphatiques, araliphatiques ou aromatiques, qui peuvent être substitués et R¹ représente un radical hydrocarboné, qui peut être substitué.

3. Procédé selon la revendication 1, **caractérisé en ce que** le composé de formule générale R(-S)ₙ du composant (d) est le dihydrazide de l'acide malonique.

4. Procédé selon l'une quelconque des revendications 1 à 3, **caractérisé en ce que** le composant (d), par rapport au poids total des composants (a) à (f), est contenu à raison de 0,01 à 5% en poids.

5. Procédé selon l'une quelconque des revendications 1 à 4, **caractérisé en ce que** les composés polymères présentant des groupes réactifs par rapport aux isocyanates (b) contiennent des polyétherols.

6. Procédé selon l'une quelconque des revendications 1 à 5, **caractérisé en ce que** les catalyseurs (c) contiennent des catalyseurs incorporables à base d'amine.

7. Procédé selon la revendication 6, **caractérisé en ce que** des composés, qui présentent outre le ou les groupes réactifs par rapport aux isocyanates, un ou plusieurs groupes amino tertiaire, aliphatiques sont utilisés comme catalyseurs incorporables.

8. Procédé selon la revendication 7, **caractérisé en ce qu'**au moins un groupe amino tertiaire du catalyseur incorporable porte deux radicaux, choisis indépendamment l'un de l'autre parmi un radical méthyle et éthyle, ainsi qu'un autre radical organique.

9. Procédé selon l'une quelconque des revendications 1 à 8, **caractérisé en ce que** le polyuréthane est une mousse de polyuréthane présentant une densité moyenne de 10 à 850 g/l.

10. Procédé selon l'une quelconque des revendications 1 à 9, **caractérisé en ce que** le polyuréthane est un polyuréthane compact présentant une densité moyenne supérieure à 850 g/l.

11. Procédé selon l'une quelconque des revendications 1 à 10, **caractérisé en ce que** le polyuréthane est un matelas ou une partie d'un mobilier.

12. Polyuréthane, pouvant être préparé selon un procédé selon l'une quelconque des revendications 1 à 11.

13. Utilisation de polyuréthanes selon la revendication 12 dans des espaces fermés.

14. Utilisation selon la revendication 13, l'espace fermé étant l'espace interne de moyens de transport.
